# NEUE EUROPÄISCHE PATENTSCHRIFT

(11) **EP 1 386 713 B2**
(45) Veröffentlichungstag und Bekanntmachung des Hinweises auf die Entscheidung über den Einspruch: **12.03.2014**
(45) Hinweis auf die Patenterteilung: 17.06.2009
(21) Anmeldenummer: 03017406.4
(22) Anmeldetag: 31.07.2003
(51) Int. Cl.: B29C 45/00

(54) **Kunststoff-Spritzguss-Formteil**
Plastic injection moulded object
Objet en matière plastique moulé par injection

(30) Priorität: 31.07.2002 DE 10234947
(43) Veröffentlichungstag der Anmeldung: 04.02.2004
(73) Patentinhaber: Kunststoff-Technik Scherer & Trier GmbH & Co. KG, 96247 Michelau (DE)
(72) Erfinder: Trier, Lothar, 96247 Michelau (DE)
(74) Vertreter: Prechtel, Jörg

(56) Entgegenhaltungen:
- DE-A1- 10 041 970
- JP-A- H07 251 425
- JP-A- H07 277 093
- PATENT ABSTRACTS OF JAPAN vol. 2002, no. 8, 5. August 2002 (2002-08-05) -& JP 2002 103395 A (MEIWA IND CO LTD), 9. April 2002 (2002-04-09) -& DATABASE WPI Week 200248 Derwent Publications Ltd., London, GB; AN 2002-448540 XP002225428 & JP 2002 103395 A
- PATENT ABSTRACTS OF JAPAN vol. 1999, no. 09, 30. Juli 1999 (1999-07-30) -& JP 11 105071 A (TOYODA GOSEI CO LTD), 20. April 1999 (1999-04-20) -& DATABASE WPI Week 199926 Derwent Publications Ltd., London, GB; AN 1999-306899 XP002225429 & JP 11 105071 A
- PATENT ABSTRACTS OF JAPAN vol. 1999, no. 5, 31. Mai 1999 (1999-05-31) -& JP 11 042981 A (NIPPON PLAST CO LTD), 16. Februar 1999 (1999-02-16)
- PATENT ABSTRACTS OF JAPAN vol. 1995, no. 2, 31. März 1995 (1995-03-31) -& JP 06 321023 A (HONDA MOTOR CO LTD), 22. November 1994 (1994-11-22)

## Beschreibung

Die Erfindung betrifft ein Kunststoff-Spritzguß-Formteil mit aneinander angrenzenden Formteilbereichen mit unterschiedlicher Wandstärke und gemeinsamer Sichtfläche an einer Wandseite.

Es ist hinreichend bekannt, dass bei Kunststoff-Formteilen mit Formteilbereichen unterschiedlicher Wandstärke die gemeinsame Sichtfläche im Übergangsbereich nicht eben ist. Es sind hier sog. Einfallstellen (auch Schwielen) erkennbar, welche die optische Qualität mindern und im ungünstigsten Fall zur Unbrauchbarkeit des Formteils führen. Je größer die Wandstärkenunterschiede innerhalb des in einem Arbeitsgang hergestellten Spritzguß-Formteils sind, umso stärker sind die Einfallstellen bzw. Schwielen, die auf unterschiedliches absolutes Schwindungsmaß beim Verfestigen des im flüssigen Zustand eingespritzen Kunststoffs zurückzuführen sind.

Um die Einfallstellen bzw. Schwielen zu mindern oder gar zu vermeiden, werden vielfach die Unterschiede in den Wandstärken einander angeglichen. Dies führt in aller Regel dazu, dass mehr Rohstoff als konstruktionsbedingt erforderlich eingesetzt werden muss. Zusätzlich muss oftmals in Abhängigkeit vom Rohstoff, aus dem die Formteile hergestellt werden, und von dessen thermoplastischem Verhalten mit stark überhöhten Spritzdrücken gefertigt werden. Die überhöhten Spritzdrücke erfordern dementsprechend höhere Zuhaltekräfte der eingesetzten Spritzguß-Maschine und führen zu einer wesentlich stärkeren Belastung der Spritzguß-Werkzeuge. Die Spritzguß-Maschinen und Werkzeuge sind vergleichsweise teuer. Auch ergibt sich ein erhöhter Energieverbrauch.

Um Formteile mit einwandfreier Sichtfläche herstellen zu können, ist es bekannt, beim Spritzen des Formteils innerhalb des Formteils einen Hohlraum auszubilden und zwar durch unter Druck einströmendes Gas. Es entsteht also ein zweiwandiges Formteil, dessen Wandstärken z.B. bei 3 mm liegen. Die zweite Wand, welche bei vielen Formteilen nicht zur Funktion des Teils erforderlich ist, bedingt einen erheblich höheren Materialeinsatz.

Aus der JP 2002-103395 A ist ein Armaturenbrett als Kunststoff-Spritzgussform mit einer sich zum Betrachter hin vorwölbenden Verdickung an einem Armaturenbrettende bekannt. Zur Vermeidung von Einfallstellen sind in die Verdickung in die Rückseite ausmündende zylindrische Hohlräume eingeformt, die nahe der Sichtfläche der Verdickung enden. Die entsprechende Spritzguss-Formhälfte ist dementsprechend mit einer Vielzahl von zylindrischen Stiften versehen.

Ein Spritzgussformteil gemäß dem Oberbegriff des Anspruchs 1 ist bekannt (JP 11-105071 A). Diese als Seitenschutzleiste von Kraftfahrzeugen einsetzbare Leiste hat einen Leistenkem aus einem relativ harten Kunstharz, der von einer vergleichsweise weichen Kunstharzschicht ummantelt ist. Einer der beiden Randbereiche ist ausgeprägter als der andere. Sowohl die Sichtseite der Leiste wie auch die Innenseite der Leiste hat jeweils einen knickfreien mehr oder weniger stark gekrümmten Verlauf, so dass der von der Karosserie entfernte Mittelbereich der Leiste kontinuierlich in die beiden Randbereiche übergeht. Auf Grund der unterschiedlichen Kontraktion der beiden Harze beim Entformen krümmt sich die Leiste um eine zur Befestigungsfläche senkrechte Krümmungsachse (Fig. 9). Um diese Krümmung zu vermeiden, wird in dem ausgeprägteren Randbereich eine relativ tiefe Riefe eingeformt ggf. zusätzlich zu Riefen geringer Tiefe in beiden Randbereichen.

Der Erfindung liegt die Aufgabe zugrunde, ein Kunststoff-Spritzguß-Formteil gemäß dem Oberbegriff des Anspruchs 1 bereitzustellen, welches bei geringen Herstellungskosten und reduziertem Herstellungsaufwand eine von Einfallstellen im wesentlichen freie Sichtfläche aufweist.

Diese Aufgabe wird durch die Merkmale des Anspruchs 1 gelöst.

Es hat sich herausgestellt, dass die von außen her nicht erkennbaren Riefen (Nuten mit im Vergleich zur Wandstärke geringer Nutbreite) die mechanische Stabilität des Formteils allenfalls geringfügig beeinträchtigen, zumal in vielen Fällen die vergleichsweise größere Wandstärke nicht aus Verstärkungsgründen sondern aus rein geometrischen Gründen erforderlich ist. Andererseits gleichen die Riefen das Schwundmaß des Formteilbereichs mit der vergleichsweise größeren Wandstärke an das Schwundmaß des anschließenden Formteilbereich mit der vergleichsweise geringen Wandstärke an, so dass die optisch störenden Einfallstellen oder Schwielen vermieden werden.

Besonders bevorzugte Anordnungen und Dimensionierungen der Riefen sind in den Unteransprüchen angegeben. Die Anzahl der Riefen wird derart festgelegt, dass die Materialanhäufungen, die über die vergleichsweise kleinere Wandstärke hinausgehen, in Einzelbereiche zerteilt werden. Auch vergleichsweise breite Bereiche dickerer Wandstärke, die oft aus technischen Gründen verlangt werden, können somit in einzelne Bereiche aufgeteilt werden, um Einfallstellen zu vermeiden.

Der mit den Riefen ausgebildete Bereich wird aufgrund seiner größeren Wandstärke und damit größeren Festigkeit als Befestigungsbereich ausgebild, der der Befestigung des Formteils an einem Träger dient.

Dieser Befestigungsbereich wird von einem Randbereich des Formteils gebildet sein, z.B. dann, wenn gemäß einer besonders bevorzugten Ausführungsform der Erfindung das Formteil von einer Seitenschutzleiste eines Kraftfahrzeuges gebildet ist.

Bei der besonders einfachen Befestigungsart durch Klebeband kann dieses an die Seitenfläche des Formteils angeklebt werden, womit es auch die Riefen abdeckt.

Ein besonders kostengünstiges Spritzwerkzeug zur Herstellung des vorstehenden beschriebenen Formteils weist erfindungsgemäß Federstahlbleche auf, die die Riefen ausbilden.

Besonders günstig ist es, die Federstahlbleche parallel zur Ausformrichtung verlaufen zu lassen, so dass keine beweglichen Formteile, wie Schieber, erforderlich sind.

Ein wesentlicher Aspekt der Erfindung ist der, dass die Materialschwächungen im Teilbereich mit der vergleichsweise größeren Wandstärke in der herstellungsgünstigen Riefenform das Schwindungsverhalten insbesondere Schwingungsmaßder beiden einander angrenzenden Formteilbereiche unterschiedlicher Wandstärke aneinander angleichen, so dass das erhaltene Formteil hohe Formtreue aufweist, da die bisher üblichen Einfallstellen oder Schwielen vermieden werden. Die Form und Anzahl der Riefen und ihre Anordnung relativ zueinander und innerhalb des Bereichs mit der größeren Wandstärke hängt von der konkreten Gestalt des Formteils ab. Generell haben sich relativ schmale jedoch vergleichsweise tiefe Riefen gemäß der Erfindung bewährt, die in einem Abstand von der Sichtfläche enden, der im Bereich der vergleichsweise kleineren Wandstärke liegt. Die Festigkeit des Formteils wird hierdurch generell nicht beeinträchtigt.

Ein bevorzugter Anwendungsfall der Erfindung ist der einer Kraftfahrzeugleiste aus den zwei sich in Längsrichtung der Leiste erstreckenden Randbereichen, die über den vergleichsweise dünneren und häufig gewölbten Mittelbereich miteinander verbunden sind. Diese beiden Randbereiche sind mit den erfindungsgemäßen Formtreue-Riefen ausgebildet. Zusätzlich können auch die Endbereiche an den beiden Längsenden der Leiste mit den Formtreue-Riefen versehen sein.

Das eingangs angesprochene Problem der Einfallsstellen bzw. Schwielen stellt sich aber nicht nur bei den Randbereichen, sondern im besonderen Maße auch dann, wenn die Leiste mit einem oder mehreren Verstärkungsstegen versehen ist, die die einander gegenüberliegenden Randbereiche verbinden oder durch schmale Abstände zu diesen, keine Verbindung zu den Randbereichen haben. Derartige Verstärkungsstege können über die Länge der Leiste verteilt angeordnet sein.

Selbst geringfügige Einfallstellen oder Schwielen sind auch im Bereich der Verstärkungsstege sehr deutlich erkennbar. Durch die erfindungsgemäßen Formtreue-Riefen auch in den Verstärkungsstegen werden sie vermieden.

Die Erfindung wird im folgenden an einem bevorzugten Ausführungsbeispiel erläutert.

Es zeigt:
- Figur 1: einen Querschnitt eines erfindungsgemäßen Spritzwerkzeugs zur Herstellung einer erfindungsgemäßen Seitenschutzleiste,
- Figur 2: einen Querschnitt der entformten Seitenschutzleiste (Schnittlinie II, II in Figur 3),
- Figur 3: eine Unteransicht von einem linkseitigen Endbereich der Leiste gemäß Figur 2 mit quer verlaufenden Verstärkungsstegen, und
- Figur 4: einen Schnitt durch diesen Endbereich (Schnittlinie IV, IV in Fig. 3).

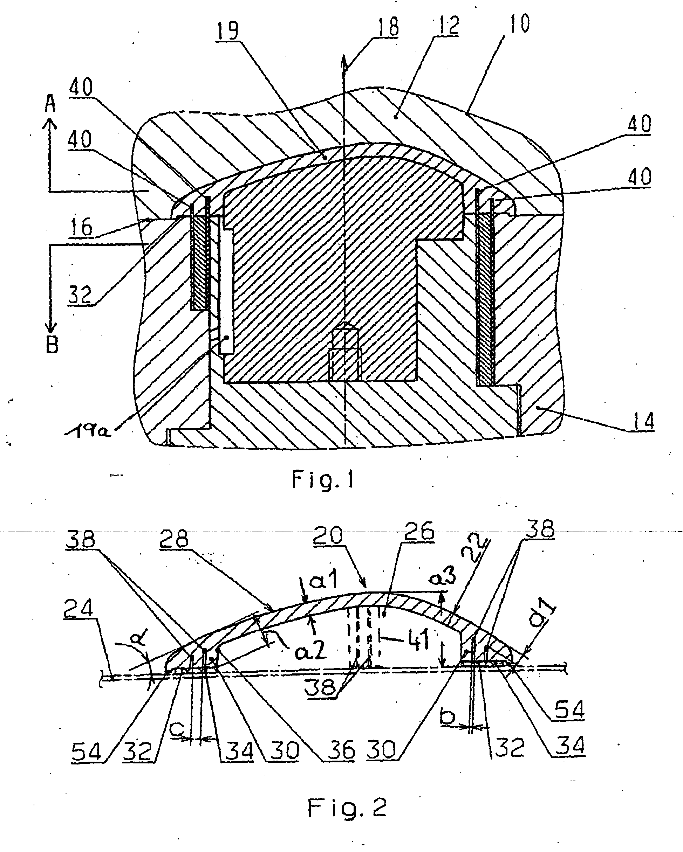

Das in Figur 1 gezeigte Spritzgußwerkzeug 10 weist ein oberes Werkzeugteil 12 und ein aus mehreren Teilen zusammengesetztes unteres Werkzeugteil 14 auf, die zwischen sich die Form-Trennfläche 16 definieren. Eine Werkzeugachse 18, die senkrecht zur Trennfläche 16 verläuft, definiert die Ausformrichtung (Bewegungspfeile A und B, die die Auseinanderbewegung der Werkzeugteile 12 und 14 bei der Entformung symbolisieren).

Zwischen den Werkzeugteilen 12 und 14 befindet sich ein Formhohlraum 19, der die äußere Form des mit dem Spritzwerkzeug 10 herstellbaren Formteils festlegt. Im vorliegenden Falle ist dieses Formteil eine Seitenschutzleiste 20, die in den Figuren 2 bis 4 im entformten Zustand dargestellt ist.

Diese Seitenschutzleiste 20 besteht hauptsächlich aus einer relativ dünnen Wand 22 (= Mittelbereich der Leiste) mit gleichmäßiger Wandstärke a1 von bevorzugt 2 mm. Die Wand 22 ist gewölbeartig gebogen und bildet somit nach Befestigung an einem Karroserieblech 24 (in Figur 2 strichliert angedeutet) einen Hohlraum 26 mit dem Karroserieblech 24. In diesen Hohlraum 26 kann die Seitenschutzleiste 20 im Falle einer entsprechenden Stoßbelastung einfedern, um so eine Beschädigung des Karrosserieblechs 24 zu verhindern.

Aufgrund der Gewölbeform ergibt sich ein spitzer Winkel *α* zwischen der die Sichtfläche 28 bildenden Oberseite der Seitenschutzleiste 20 und der Oberfläche des Karrosserieblechs 24 im Befestigungsbereich. Um eine Befestigungsfläche bilden zu können, ist an beiden Längsrändern der Leiste 20 jeweils ein im Querschnitt im wesentlichen dreiecksförmiger Randbereich 30 angeformt. Dessen Unterseite bildet eine zur Oberseite des Karrosserieblechs 24 parallele Klebefläche 32 für ein doppelseitiges Klebeband 34. Eine weitere Begrenzungsfläche 36 des Randbereichs 30 ist dem Hohlraum 26 zugewandt und verläuft senkrecht zur Klebefläche 32 und parallel zur Ausformrichtung bzw. Werkzeugachse 18 innerhalb des Spritzwerkzeugs 10.

Zur Form des Randbereichs ist noch zu ergänzen, dass der äußere Rand nicht spitz entsprechend dem Winkel α ausläuft, sondern abgerundet ist und letztlich im rechten Winkel auf das Karrosserieblech 24 ausläuft.

Verfolgt man im Ausführungsbeispiel die zur leicht gebogenen Sichtfläche 28 jeweils senkrechte Wandstärke a des Formteils, ausgehend von der Wand 22 mit konstanter, vergleichsweise kleineren Wandstärke a1, bevorzugt 2 mm, so ergibt sich beim Eintritt in den Randbereich 30 zuerst ein Ansteigen der Wandstärke a bis zu einem Maximalwert a2 entsprechend etwa dem 3-fachen von a1. Anschließend fällt die Wandstärke a zum Rand hin wieder ab.

Diese beim Übergang von der Wand 22 zum Randbereich 30 und auch innerhalb des Randbereichs stark variierende Wandstärke a würde ohne die im folgenden zu beschreibenden Maßnahmen dazu führen, dass die Sichtfläche 28 in dem Übergangsbereich deutlich sichtbare Einfallstellen und Schwielen aufweisen würde. Diese sind auf ein unterschiedlich starkes Schwinden des Kunststoffmaterials bei der Abkühlung vom flüssigen Zustand zum festen Zustand zurückzuführen.

Diese Einfallstellen werden dadurch verhindert, dass die beiden Randbereiche größere Wandstärke aufweisen als der Mittelbereich 22 und dass in beiden Randbereichen Riefen 38 eingearbeitet sind und derart angeordnet und dimensioniert sind, dass sie in einem Abstand zur Sichtfläche 28 enden, der im Bereich der vergleichsweise kleineren Wandstärkeliegt, so dass das gennannte unterschiedlich starke Schwinden vermieden wird.

Im Beispielsfall sind jeweils zwei Riefen 38 im jeweiligen Randbereich 30 ausgeformt. Sie münden jeweils in der Klebefläche 32 aus. Sie sind daher von außen keinesfalls sichtbar und zudem durch das Klebeband 34 verschlossen. Feuchtigkeit kann somit nicht in die Riefen 38 eindringen. Auch verbessert sich die Haftwirkung zwischen Klebeband 34 und Seitenschutzleiste 20. Es hat sich gezeigt, dass das Klebeband 34 leichter auf die mit Riefen 38 versehene Klebefläche 32 aufzubringen ist, weil Lufteinschlüsse zwischen der Klebefläche 32 und dem Klebeband 34 vermieden werden, da die Luft über die Riefen 38 entweichen kann. Bei einer durchgehenden Klebefläche ist dies nicht der Fall.

Die Breite b der Riefen 38 beträgt bevorzugt 0,3 - 0,5 mm. Breitere Riefen würden die Klebeflächen reduzieren, dünnere Riefen bedingen im Werkzeug dünnere Federstahlbleche 40 und wären dementsprechend instabil im Bereich, in dem sie in den Formhohlraum 19 hineinragen.

Der Querabstand c benachbarter Riefen 38 liegt im Bereich der vergleichsweise kleineren Wandstärke a1 von ca. 2 mm. Die Riefen 38 verlaufen senkrecht zur jeweiligen Klebefläche 32 und damit (innerhalb des Spritzwerkzeugs 10) parallel zur Achse 18. Innerhalb des jeweiligen Randbereichs 30 enden die Riefen 38 in einem Abstand d von der Sichtfläche 28, der der Wandstärke a1 im wesentlichen entspricht.

Die Riefen 38 werden in besonders einfacher Weise dadurch hergestellt, dass das untere Werkzeugteil 14 mit den bereits erwähnten Federstahlblechen 40 versehen wird, die nach oben in den Hohlraum 19 vorstehen und entsprechend den gewünschten Riefen 38 angeordnet und dimensioniert sind. Da sie parallel zur Werkzeugachse 18 verlaufen, ergeben sich keine Probleme bei der Entformung. Zu erwähnen ist noch ein Teilhohlraum 19a, der der Ausformung einer Anspritzlasche dient.

Es liegt im Bereich der Erfindung, dass bei einem breiteren Formteil, z.B. 100 mm oder darüber, nicht nur die beiden sich in Längsrichtung der Leiste erstreckenden Randbereich den Formteilkörper gestalten, sondern noch ein oder auch zwei Befestigungsbereiche, die etwa mittig im Formteil zwischen den beiden Randbereichen vorgesehen sein können. Ein derartiger Befestigungs- oder Verstärkungsbereich in der bevorzugten Form eines Längsstegs 41 ist in Figur 2 mit unterbrochener Umrißlinie lediglich schematisch angedeutet. Auch diese wieder längsverlaufenden Verstärkungsbereiche können als zusätzliche Klebeflächen für 2-seitige Klebebänder 34 gestaltet sein. Auf jeden Fall aber müssen die Riefen 38 eingebracht sein, weil hier die zur Sichtfläche 28 senkrechte Wandstärke a3 der Leiste 20 die Wandstärke a1 der Wand 22 beträchtlich überschreitet.

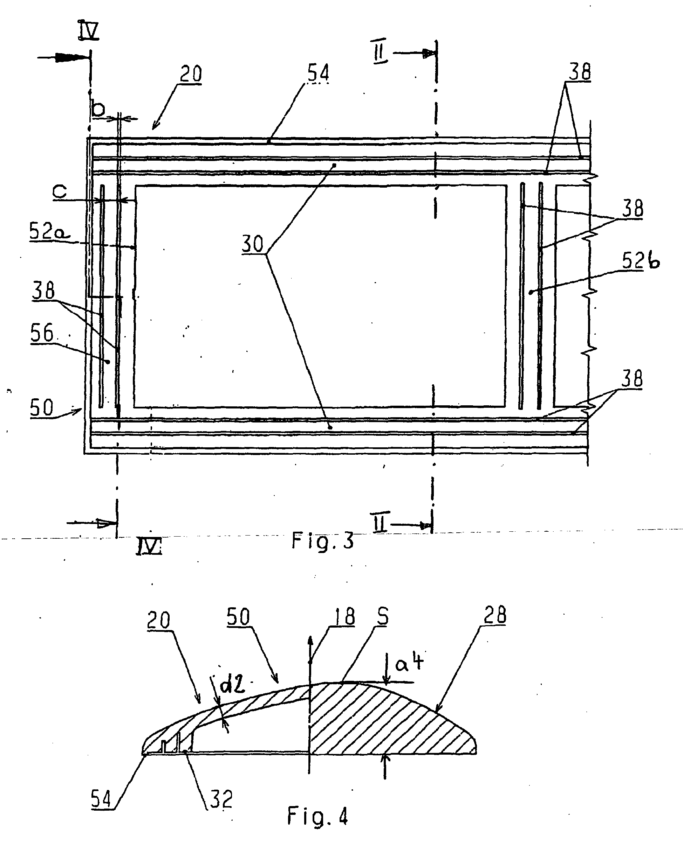

In den Figuren 3 und 4 erkennt man zusätzlich zu den beiden mit den Riefen 38 versehenen Randbereichen 30 einen linkseitigen Endbereich 50 in Form eines die Leiste 20 abschließenden und quer oder schräg zur Leistenlängsrichtung verlaufenden Verstärkungsstegs 52a. Seine im Ausführungsbeispiel im wesentlichen ebene Unterseite 56 geht stufenlos in die Klebefläche 32 der beiden Randbereiche 30 über.

Die Leistenhöhe des Endbereichs 50 (und damit die dortige lokale Wandstärke a4 der Leiste 20) ist im Scheitelpunkt S ca. 11 mm. Sie nimmt zu den Randbereichen 30 hin ab, wobei sie aber stets deutlich höher ist als die Wandstärke a1 der Wand 22.

Die beiden längsverlaufenden Randbereiche 30 sowie der Endbereich 50 und ein ggf. vorgesehener zweiter Endbereich 50 am anderen Ende der Leiste 20 werden von einem schmalen Steg 54, etwa 0,4 mm hoch, am jeweils äußeren Rand umgriffen. Dieser Steg 54 dient dazu, dass die aufgebrachten beidseitigen Klebebänder 34 nach dem Aufbringen der Leiste an die Karosse weniger sichtbar bleiben. Die beidseitigen Klebebänder 34 sind ca. 0,8 mm stark, wobei ca. die Hälfte dieser Stärke durch den Steg 54, der 0,4 mm hoch ist, abgedeckt ist.

Ferner kann wenigstens ein weiterer Verstärkungssteg 52b von den Endbereichen 50 beabstandet an der Leiste 20 ausgeformt sein, wie in Figur 3 rechts angedeutet. Auch dieser Verstärkungssteg 52b ist mit den erfindungsgemäßen Riefen 38 zu versehen.

Zu ergänzen ist noch, dass die längsverlaufenden Klebeflächen 32 erweitert sind um die Fläche, die der mindestens eine quer oder schräg verlaufende Verstärkungssteg 52a bzw. 52b bildet.

Im Beispielfall erstrecken sich die Riefen 38 der beiden längsverlaufenden Randbereiche 30 fast bis zum jeweiligen äußeren Leistenende und die Riefen 38 der quer oder schräg verlaufenden Verstärkungsstege 52a, 52b etwa bis zum jeweiligen Randbereich 30.

Die Riefen 38 der quer oder schräg verlaufenden Verstärkungsstege 52a, 52b werden in gleicher Weise wie die Riefen 38 in den längsverlaufenden Randbereichen 30 durch in die untere Formenhälfte der Figur 1 eingesetzten Federstahlbleche 40 ausgeformt. Dies ist problemlos möglich, da auch diese Federstahlbleche 40 in Richtung der Werkzeugachse 18 verlaufen.

Wie Figur 4 zeigt, folgt die Kontur der jeweiligen Riefe 38 des Verstärkungsstegs 52a bzw. 52b angenähert der Kontur der Begrenzung des Hohlraums 26 gemäß Figur 2. Die Riefe 38 endet somit in einem Abstand d2 von der Sichtfläche 28 der im Wesentlichen der Dicke a1 der auf den Endbereich 50 folgenden Wand 22 gemäß Figur 2 entspricht. Die Breite b der Riefen 38 und ihr gegenseitiger Abstand c entspricht jeweils dem der Riefen 38 der Randbereiche 30 wie vorstehend angegeben.

Leisten mit vergleichsweise schmalen Randbereichen 30 und, Verstärkungsstegen 52a, 52b können statt mit zwei erfindungsgemäßen Riefen 38 jeweils nur mit einer Riefe 38 gestaltet sein. Bei vergleichsweise breiten Randbereichen 30 bzw. Verstärkungsstegen 52a, 52b können auch drei oder mehr Riefen 38 ausgeformt werden.

Die vorstehend beschriebene Seitenschutzleiste 20 zeichnet sich durch besonders einfache Herstellbarkeit, vergleichweise geringen Materialeinsatz und einfallstellenfreie Sichtfläche 28 aus.

## Patentansprüche

1. Kunststoff Spritzguß-Formteil mit aneinander angrenzenden Formteilbereichen unterschiedlicher Wandstärke und gemeinsamer Sichtfläche an einer Wandseite, in Form einer Leiste (20) mit zwei einander gegenüberliegenden, längs verlaufenden Randbereichen (30) und einem beide Randbereiche verbindenden Mittelbereich (22), wobei die beiden Randbereiche (30) jeweils mit mindestens einer Riefe (38) versehen sind, die in einer von der Sichtfläche (28) verschiedenen Seitenfläche des Formteils ausmündet; und wobei die Randbereiche jeweils als Befestigungsfläche, vorzugsweise für Klebebänder (34), zur Befestigung des Bauteils an einem Träger ausgebildet sind, wobei die beiden Randbereiche (30) größere Wandstärke (a2, a3, a4) aufweisen als der Mittelbereich (22), und wobei in beiden Randbereichen (30) die mindestens eine Riefe (38), derart angeordnet und dimensioniert ist, dass die Riefen (38) im Formteil in einem Abstand (d) zur Sichtfläche (28) enden, der im Bereich der vergleichsweise kleineren Wandstärke (a1) liegt, so dass die Sichtfläche (28) im Bereich der Übergänge zwischen dem Mittelbereich und den beiden Randbereichen im Wesentlichen frei von erkennbaren Einfallstellen bleibt,
**dadurch gekennzeichnet, dass** die Breite (b) der Riefen (38) das 0,025 - 0,3-fache der vergleichsweise kleineren Wandstärke (a1) beträgt.

2. Formteil nach Anspruch 1, **dadurch gekennzeichnet, dass** eine von der Befestigungsfläche zu der von der Sichtfläche (28) abgewandten Unterseite des Formteilbereichs mit der vergleichsweise geringeren Wandstärke verlaufende Begrenzungsfläche (36) des Formteilbereichs mit der vergleichsweise größeren Wandstärke im Wesentlichen senkrecht zur Befestigungsfläche verläuft.

3. Formteil nach Anspruch 1 oder 2, **dadurch gekennzeichnet, dass** der Formteilbereich vergleichsweise geringerer Wandstärke eine im wesentlichen gleichmäßige Wandstärke (a1) aufweist.

4. Formteil nach einem der vorhergehenden Ansprüche, **dadurch gekennzeichnet, dass** der Abstand (d) das 0,7 - 1,1-fache, besser das 0,9 - 1,05-fache, am besten etwa das 1-fache der vergleichsweisen kleineren Wandstärke (a1) beträgt.

5. Formteil nach einem der vorhergehenden Ansprüche, **dadurch gekennzeichnet, dass** die Breite (b) der Riefen (38) das 0,1 - 0,2-fache, vorzugsweise das 0,125 - 0,175-fache der vergleichsweise kleineren Wandstärke (a1) beträgt.

6. Formteil nach einem der vorhergehenden Ansprüche, **dadurch gekennzeichnet, dass** die Breite (b) der Riefen (38) 0,05 - 0,9mm, besser 0,3 - 0,5mm beträgt.

7. Formteil nach Anspruch 6, **dadurch gekennzeichnet, dass** der Querabstand (c) benachbarter Riefen (38) das 0,3 - 1,2-fache, besser das 0,8 - 1,1-fache, noch besser das 0,9 - 1,05-fache, am besten das 1-fache der vergleichsweise kleineren Wandstärke (a1) beträgt.

8. Formteil nach Anspruch 1, **dadurch gekennzeichnet, dass** der Randbereich mit nur einer Riefe ausgebildet ist.

9. Formteil nach Anspruch 1, **dadurch gekennzeichnet, dass** der Randbereich (30) mit zwei Riefen (38) ausgebildet ist.

10. Formteil nach Anspruch 1, **dadurch gekennzeichnet, dass** der Randbereich mit wenigstens drei Riefen ausgebildet ist.

11. Formteil nach Anspruch 1, **dadurch gekennzeichnet, dass** die Klebefläche (32) mit einem doppelseitig klebenden Band (34) versehen ist.

12. Formteil nach einem der vorhergehenden Ansprüche, **dadurch gekennzeichnet, dass** es als Kraftfahrzeugteil ausgebildet ist.

13. Formteil nach Anspruch 12, **dadurch gekennzeichnet, dass** es als Seitenschutzleiste (20) ausgebildet ist.

14. Kunststoff-Spritzguß-Formteil nach Anspruch 1, ferner umfassend mindestens einen Verstärkungssteg (52a, 52b, 41), welcher längs oder quer oder schräg verläuft, der mindestens eine Verstärkungssteg (41, 52a, 52b) eine größere Wandstärke (a2, a3, a4) aufweist als der Mittelbereich (22), wobei der mindestens eine Verstärkungssteg (52a, 52b, 41) jeweils mit mindestens einer Riefe (38) gemäß Anspruch 1 versehen ist.

15. Kunststoff-Spritzguß-Formteil nach Anspruch 14, **dadurch gekennzeichnet, dass** der mindestens eine quer oder schräg verlaufende Verstärkungssteg (52a, 52b) am Ende der Leiste oder innerhalb der Leiste positioniert ist.

16. Kunststoff-Spritzguß-Formteil nach Anspruch 14 oder 15, **dadurch gekennzeichnet, dass** der mindestens eine quer oder schräg verlaufende Verstärkungssteg keine Verbindung zu den Randbereichen hat.

17. Kunststoff-Spritzguß-Formteil nach Anspruch 14 oder 15, **dadurch gekennzeichnet, dass** zwischen dem mindestens einen quer oder schräg verlaufenden Verstärkungssteg (52) und den längsverlaufenden Randbereichen (30) eine Verbindung besteht.

18. Spritzwerkzeug (10) für ein Formteil nach einem der vorhergehenden Ansprüche, **dadurch gekennzeichnet, dass** es mit Federstahlblechen (40) zur Ausformung der Riefen (38) versehen ist.

19. Spritzwerkzeug nach Anspruch 18, **dadurch gekennzeichnet, dass** die Federstahlbleche (40) parallel zur Ausformrichtung (Achse 18) verlaufen.

## Claims

1. A plastic injection-moulded object with adjoining moulded object zones of different wall thickness and a common visible surface on one wall side, in the form of a strip (20) with two opposing longitudinally extending edge zones (30) and a middle zone (22) connecting the two edge zones, wherein the edge zones (30) are each provided with at least one groove (38) which opens into a lateral surface of the moulded object different from the visible surface (28); and wherein the edge zones are each formed as a fastening surface, preferably for adhesive tape (34), for fastening the component to a support, wherein the two edge zones (30) are of greater wall thickness (a2,a3,a4) than the middle zone (22), and wherein in both edge zones (30) the at least one groove (38) is so arranged and is of such dimensions that the groove (38) in the moulded object end at a distance (d) from the visible surface (28) which lies within the range of the comparatively smaller wall thickness (a1) so that the visible surface (28) in the vicinity of the transitions between the middle zone and the two edge zones remains substantially free of discernible sink marks, **characterised in that** the width (b) of the grooves (38) amounts to 0.025-0.3 times the comparatively smaller wall thickness (a1).

2. A moulded object according to Claim 1, **characterised in that** a boundary surface (36) of the moulded object zone with the comparatively greater wall thickness extending from fastening surface to the underside, which is remote from the visible surface (28), of the moulded object zone with the comparatively smaller wall thickness extends substantially perpendicular to the fastening surface.

3. A moulded object according to Claim 1 or 2, **characterised in that** the moulded object zone of comparatively smaller wall thickness has a substantially uniform wall thickness (a1).

4. A moulded object according to any one of the preceding Claims, **characterised in that** the distance (d) amounts to 0.7 to 1.1 times, more preferably 0.9 to 1.05 times, most preferably approximately 1 times the comparatively smaller wall thickness (a1).

5. A moulded object according to any one of the preceding Claims, **characterised in that** the width (b) of the grooves (38) amounts to 0.1 to 0.2 times, most preferably 0.125 to 0.175 times the comparatively smaller wall thickness (a1).

6. A moulded object according to any one of the preceding Claims, **characterised in that** the width (b) of the grooves (38) amounts to 0.05 to 0.9 mm, preferably 0.3 to 0.5 mm.

7. A moulded object according to Claim 6, **characterised in that** the transverse spacing (c) of adjacent grooves (38) amounts to 0.3 to 1.2 times, preferably 0.8 to 1.1 times, more preferably 0.9 to 1.05 times, most preferably 1 times the comparatively smaller wall thickness (a1).

8. A moulded object according to Claim 1, **characterised in that** the edge zone is formed with only one groove.

9. A moulded object according to Claim 1, **characterised in that** the edge zone (3) is formed with two grooves (38).

10. A moulded object according to Claim 1, **characterised in that** the edge zone is formed with at least three grooves.

11. A moulded object according to Claim 1, **characterised in that** the adhesive surface (32) is provided with a double-sided adhesive tape (34).

12. A moulded object according to any one of the preceding Claims, **characterised in that** it is in the form of a motor vehicle part.

13. A moulded object according to Claim 12, **characterised in that** it is in the form of side protection strip (20).

14. A plastic injection-moulded object according to Claim 1, further comprising at least one reinforcing web (52a,52b,41) which extends longitudinally or transversely or obliquely, the at least one reinforcing web (41,52a,52b) has a greater wall thickness (a2,a3,a4) than the middle zone (22), wherein the at least one reinforcing web (52a,52b,41) is provided in each case with at least one groove (38) according to Claim 1.

15. A plastic injection-moulded object according to Claim 14, **characterised in that** the at least one transversely or obliquely extending reinforcing web (52a,52b) is positioned at the end of the strip or inside the strip.

16. A plastic injection-moulded object according to Claim 14 or 15, **characterised in that** the at least one transversely or obliquely extending reinforcing web has no connection to the edge zones.

17. A plastic injection-moulded object according to Claim 14 or 15, **characterised in that** a connection exists between the at least one transversely or obliquely extending reinforcing web (52) and the longitudinally extending edge zones (30).

18. An injection-moulding die (10) for a moulded object according to any one of the preceding Claims, **characterised in that** it is provided with spring steel plates (40) for forming the grooves (38).

19. An injection-moulding die according to Claim 18, **characterised in that** the spring steel plates (40) extend parallel to the demoulding direction (axis 18).

## Revendications

1. Pièce moulée par injection en matière plastique avec des zones contigües les unes aux autres ayant des épaisseurs de paroi différentes et une surface visible commune sur un côté de paroi en forme de baguette (20) avec deux zones de bord (30) opposées qui s'étendent longitudinalement et une zone médiane (22) reliant les deux zones de bord, dans laquelle les deux zones de bord (30) sont pourvues respectivement d'au moins une rainure (38) qui débouche dans une surface latérale différente de la surface visible (28) de la pièce moulée ; et dans laquelle les zones de bord sont réalisées respectivement comme une surface de fixation, de préférence pour des rubans adhésifs (34) pour la fixation du composant à un support, dans laquelle les deux zones de bord (30) présentent une épaisseur de paroi (a2, a3, a4) supérieure à celle de la zone médiane (22) et dans laquelle dans les deux zones de bord (30), au moins une rainure (38) est disposée et dimensionnée de sorte que les rainures (38) se terminent à une distance (d) de la surface visible (28) dans la pièce moulée la surface visible (28) se trouvant dans la zone de l'épaisseur de paroi (a1) qui est comparativement plus petite, de sorte que la surface visible (28) reste libre de retassures dans une zone de transition entre la zone médiane et les deux zones de bord, **caractérisée en ce que** la largeur (b) des rainures (38) représente 0,025 à 0,3 fois l'épaisseur (a1), comparativement, de la paroi.

2. Pièce moulée selon la revendication 1, **caractérisée en ce qu'**une surface de délimitation (36) de la zone de la pièce moulée s'étend de la paroi présentant une épaisseur comparativement plus grande à la surface de fixation de la face inférieure éloignée de la surface visible (28) de la zone de la pièce moulée, à la paroi présentant une épaisseur plus faible, la surface de délimitation s'étendant essentiellement perpendiculairement à la surface de fixation.

3. Pièce moulée selon la revendication 1 ou 2, **caractérisée en ce que** la zone de la pièce moulée dont l'épaisseur de paroi comparativement plus faible présente une épaisseur de paroi (a1) essentiellement uniforme.

4. Pièce moulée selon l'une quelconque des revendications précédentes, **caractérisée en ce que** la distance (d) est de 0,7 à 1,1 fois, préférentiellement de 0,9 à 1,05 fois, encore plus préférentiellement égale à environ 1 fois l'épaisseur de paroi (a1), comparativement plus petite.

5. Pièce moulée selon l'une quelconque des revendications précédentes, **caractérisée en ce que** la largeur (b) des rainures (38) est de 0,1 à 0,2 fois, de préférence de 0,125 à 0,175 fois l'épaisseur de paroi (a1), comparativement plus petite.

6. Pièce moulée selon l'une quelconque des revendications précédentes, **caractérisée en ce que** la largeur (b) des rainures (38) est comprise entre 0,05 et 0,9 mm, préférentiellement entre 0,3 et 0,5 mm.

7. Pièce moulée selon la revendication 6, **caractérisée en ce que** la distance transversale (c) de rainures (38) contiguës est de 0,3 à 1,2 fois, préférentiellement de 0,8 à 1,1 fois, encore plus préférentiellement de 0,9 à 1,05 fois, et de manière la plus préférentielle égale à 1 fois l'épaisseur de paroi (a1), comparativement plus petite.

8. Pièce moulée selon la revendication 1, **caractérisée en ce que** la zone de bord est réalisée avec une seule rainure.

9. Pièce moulée selon la revendication 1, **caractérisée en ce que** la zone de bord (30) est réalisée avec deux rainures (38).

10. Pièce moulée selon la revendication 1, **caractérisée en ce que** la zone de bord est réalisée avec au moins trois rainures.

11. Pièce moulée selon la revendication 1, **caractérisée en ce que** la surface adhésive (32) est pourvue d'une bande (34) collante double face.

12. Pièce moulée selon l'une quelconque des revendications précédentes, **caractérisée en ce qu'**elle est conformée en pièce de véhicule automobile.

13. Pièce moulée selon la revendication 12, **caractérisée en ce qu'**elle est conformée en baguette de protection latérale (20).

14. Pièce moulée par injection en matière plastique selon la revendication 1, comprenant en outre au moins une nervure de renforcement (52a, 52b, 41) qui s'étend longitudinalement, ou transversalement ou obliquement, ladite au moins une nervure de renforcement (41, 52a, 52b) présentant une épaisseur de paroi supérieure (a2, a3, a4) à celle de la zone médiane (22), de sorte que ladite une nervure de renforcement (52a, 52b, 41) étant pourvue d'au moins une rainure (38) selon la revendication 1.

15. Pièce moulée par injection en matière plastique selon la revendication 14, **caractérisée en ce que** la au moins une nervure de renforcement (52a, 52b) s'étendant transversalement ou obliquement est positionnée au niveau de l'extrémité de la baguette ou dans la baguette.

16. Pièce moulée par injection en matière plastique selon la revendication 14 ou 15, **caractérisée en ce que** la au moins une nervure de renforcement s'étendant transversalement ou obliquement ne présente aucune liaison aux zones de bord.

17. Pièce moulée par injection en matière plastique selon la revendication 14 ou 15, **caractérisée en ce qu'**une liaison existe entre la au moins une nervure de renforcement (52) s'étendant transversalement ou obliquement et les zones de bord (30) s'étendant longitudinalement.

18. Outil d'injection (10) pour une pièce moulée selon l'une quelconque des revendications précédentes, **caractérisé en ce qu'**il est pourvu de tôles en acier à ressort (40) pour la formation des rainures (38).

19. Outil d'injection selon la revendication 18, **caractérisé en ce que** les tôles en acier à ressort (40) s'étendent parallèlement au sens de formation (axe 18).
